(19) **Europäisches Patentamt / European Patent Office / Office européen des brevets**

(11) **EP 2 413 066 A1**

(12) # EUROPEAN PATENT APPLICATION
published in accordance with Art. 153(4) EPC

(43) Date of publication:
**01.02.2012 Bulletin 2012/05**

(21) Application number: **10756004.7**

(22) Date of filing: **19.03.2010**

(51) Int Cl.:
*F25B 1/00* (2006.01)        *C09K 5/04* (2006.01)
*C10M 147/02* (2006.01)       *C10M 155/02* (2006.01)
*C10N 40/30* (2006.01)

(86) International application number:
**PCT/JP2010/054816**

(87) International publication number:
**WO 2010/110207 (30.09.2010 Gazette 2010/39)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.03.2009 JP 2009078606**

(71) Applicants:
• **Sanden Corporation**
  **Isesaki-shi**
  **Gunma 372-8502 (JP)**
• **Gunma Prefecture**
  **Gunma 371-8570 (JP)**

(72) Inventors:
• **KOMATSU, Shunji**
  **Isesaki-shi**
  **Gunma 372-8502 (JP)**
• **SUZUKI, Takashi**
  **Maebashi-shi**
  **Gunma 379-2147 (JP)**

(74) Representative: **Prüfer & Partner GbR**
  **European Patent Attorneys**
  **Sohnckestrasse 12**
  **81479 München (DE)**

(54) **REFRIGERATION CIRCUIT-FORMING MEMBER**

(57)    Disclosed is a refrigeration circuit-forming member which has a metal surface and is used for a refrigeration circuit in which HFO-1234yf that is a refrigerant configured of molecules having a double bond is used. The metal surface, which comes into contact with the HFO-1234yf, is covered with a coating layer that is not reactive with the HFO-1234yf within the range of temperature at which the HFO-1234yf is used. The coating layer is formed of any of a coating film that is firmly fixed to the metal surface, a coating layer that is formed by adhesion of a specific component added into the lubricant oil, and a coating layer that is formed by modification of the metal surface layer itself that forms the metal surface. Consequently, the chemical instability that is caused when the refrigerant HFO-1234yf comes into contact with the metal can be eliminated.

FIG. 8

EP 2 413 066 A1

**Description**

Technical Field of the Invention

The present invention relates to a refrigeration circuit-forming member having a metal surface, and specifically, to a refrigeration circuit-forming member used for a refrigeration circuit in which HFO-1234yf, that is a specific refrigerant which has been able to be gotten recently, is used.

Background Art of the Invention

As a refrigerant which is used in a conventional refrigeration circuit, for example, a refrigeration circuit for an air conditioning system for vehicles, hydrofluoro carbon (HFC), specifically HFC-134a, has been used as an alternate Freon. Although the ozone depletion potential (ODP) of this hydrofluoro carbon is approximately 0, its global warming potential (GWP) is relatively high. As a refrigerant whose GWP is relatively low, a refrigerant containing a compound having a carbon double bond such as hydrofluoro olefin, etc. is proposed (for example, Patent document 1).

In the field of a refrigeration circuit for an air conditioning system for vehicles, by the EU Freon gas regulation, use of a refrigerant having a GWP of 150 or less is obligated from the year of 2011 in the European countries. Therefore, many car makers have decided to use HFO-1234yf which is a refrigerant whose GWP is 4, has recently been sold on the market and is available to be gotten, although the refrigerant is not described in Patent document 1 described above. However, because this HFO-1234yf has a double bond in the molecule, it is chemically unstable relative to the conventional refrigerant HFC-134a.

Prior art documents

Patent document

    Patent document 1: US Patent 6,858,571B2

Summary of the Invention

Problems to be solved by the Invention

It is not clarified exactly how much the HFO-1234yf which has extremely low GWP as described above is chemically unstable. In particular, when the refrigerant HFO-1234yf comes into contact with a surface, especially a metal surface, of a member for forming a refrigeration circuit, it is not clarified exactly how much it is chemically unstable.

Therefore, it is desired that what kind of metal surface the refrigerant HFO-1234yf excellent in GWP is chemically unstable with is clarified and that, based thereon, a measure for eliminating the chemical instability is taken.

Accordingly, an object of the present invention is to clarify the chemical instability when the refrigerant HFO-1234yf which has a double bond in a molecule comes into contact with metal and, based thereon, ultimately, to provide a refrigeration circuit-forming member having a metal surface that a measure capable of eliminating the chemical instability is taken. Namely, an object of the present invention is to make it possible to use HFO-1234yf actually and stably as a trump card-like refrigerant which is used in a refrigeration circuit in order to prevent global warming.

Means for solving the Problems

To accomplish the present invention, as aforementioned, first, it is necessary to examine the chemical instability when the refrigerant HFO-1234yf having a double bond in a molecule comes into contact with metal. Although the detail of the examination method and examination result will be described later, based on the examination result, in respect to a metal surface required to take a measure, basically by covering with a coating layer, to shield a metal surface, which induces the chemical instability of HFO-1234yf, from the HFO-1234yf by the coating layer so as not to come into contact directly with the HFO-1234yf, is the basic technical concept of the present invention which is ultimately sought.

Namely, to achieve the above-described object, a refrigeration circuit-forming member according to the present invention is a refrigeration circuit-forming member which has a metal surface and is used for a refrigeration circuit in which HFO-1234yf that is a specific refrigerant configured of molecules having a double bond is used, is **characterized in that** the metal surface of the member coming into contact with the HFO-1234yf is covered with a coating layer that is substantially not reactive with the HFO-1234yf within a range of temperature at which the HFO-1234yf is used, and the coating layer is formed by any of (1) fixing a coating film firmly to the metal surface, (2) applying a specific component, which is added into a lubricant oil circulated in the refrigerant circuit together with the HFO-1234yf, adhesively to the metal surface and (3) modifying a metal surface layer itself that forms the metal surface.

Namely, by the coating layer formed by any one of the above-described methods (1), (2) and (3), a metal surface positioned at an inner side of the coating layer can be prevented from coming into contact directly with HFO-1234yf, and decomposition or polymerization of HFO-1234yf, which is caused by chemical reaction with the metal surface originating from the above-described double bond, can be prevented. If a decomposed material or a polymerized material from HFO-1234yf is generated, the refrigerant performance of HFO-1234yf being circulated in a refrigeration circuit may be deteriorated, and there is a fear that a target refrigerant performance, further, a target GWP, may not be achieved. In the present invention, however, because by the above-described coating layer a direct contact between HFO-1234yf and a metal surface which induces the chemical instability of HFO-1234yf is avoided, such a fear may be removed, and the refrigerant performance of HFO-1234yf itself, in particular, the excellent GWP-achieving performance thereof, can be exhibited efficiently.

In the above-described method (1), It is preferred that the coating layer which is fixed to the above-described metal surface is formed of any one selected from the group consisting of a DLC coating film, a resin-coating film, a tungsten • carbide coating film, a molybdenum disulfide coating film, a boron nitride coating film, a zinc-plated coating film, a tin-plated coating film, an $SiO_2$-containing coating film, an Fe-P-based electroplated coating film, an Fe-W-based electroplated coating film, an Fe-C-based electroplated coating film, an Fe-N-based electroplated coating film, a Co-based electroplated coating film, a Co-W-based electroplated coating film and a Cr-Mo-based electroplated coating film. Where, the DLC (Diamond Like Carbon) coating film means a coating layer of an amorphous carbon hydride. As a resin of the above-described resin-coating film, for example, polytetrafluoroethylene which can exhibit high heat resistance and high durability can be exemplified.

Further, in the above-described method (2), it is preferred that the specific component, which is added into the above-described lubricant oil and is applied adhesively to the above-described metal surface, contains at least a silicone-based component or a fluorine-based component, or both of the components. Because these silicone-based component and fluorine-based component are components which have heat resistance and are relatively stable chemically, by containing these components in the lubricant oil, a desired coating layer which is substantially not reactive with HFO-1234yf within a range of a temperature at which HFO-1234yf is used is likely to be formed on the metal surface.

Furthermore, in the above-described method (3), it is possible to perform the above-described modification of the metal surface layer itself by anodic oxidation. Although the anodic oxidation is particularly effective typically with respect to a metal surface consisting of aluminum or an aluminum alloy, it can also be applied to other metals.

As the material for forming the metal surface which is an object to be covered with the coating layer in the present invention, a material containing at least one or more selected from the group consisting of an Al component, an Fe component and a Cu component can be exemplified. In particular, from the result of the investigation and examination described later, the present invention is particularly effective for a metal surface containing an A1 component or an Fe-based component.

Although the refrigeration circuit in the present invention is not particularly limited as long as HFO-1234yf is used therein, the advantage of prevention of global warming is significant especially when the present invention is applied to a refrigeration circuit for an air conditioning system for vehicles.

Further, the refrigeration circuit-forming member according to the present invention is effective especially in case where the metal surface is exposed under severe conditions. For example, in case of a refrigeration circuit-forming member which comprises an interior sliding member of a compressor provided in the refrigeration circuit, the present invention is effective in particular. As such an interior sliding member of a compressor, for example, exemplified are a shoe coming into slidable contact with a swash plate and a side surface of the swash plate coming into slidable contact with the shoe in case of a swash plate-type compressor, a scroll member in case of a scroll-type compressor.

Effect according to the Invention

In a refrigerant circuit-forming member according to the present invention, even in case of use of the refrigerant HFO-1234yf which has a double bond in a molecule and is chemically unstable when coming into contact with metal, by covering the target metal surface with an adequate coating layer, it becomes possible to prevent the decomposition and polymerization of HFO-1234yf and to use HFO-1234yf in a stable state, and to exhibit the excellent GWP, which HFO-1234yf itself has, without causing problems on use.

Brief explanation of the drawings

[Fig. 1] Fig. 1 is a graph showing a result of an examination in which a decomposition behavior of HFO-1234yf under the existence of Cu was investigated in order to confirm effectiveness of the present invention.

[Fig. 2] Fig. 2 is a graph showing a result of an examination in which a decomposition behavior of HFO-1234yf under the existence of Fe was investigated in order to confirm effectiveness of the present invention.

[Fig. 3] Fig. 3 is a graph showing a result of an examination in which a decomposition behavior of HFO-1234yf under the existence of aluminum was investigated in order to confirm effectiveness of the present invention.

[Fig. 4] Fig. 4 is a graph sorting out decomposition behaviors of HFO-1234yf under the existence of Cu, Fe and aluminum at a temperature of 300 °C from the results of Figs. 1-3.

[Fig. 5] Fig. 5 is a graph showing a result of an examination in which decomposition behaviors of a conventional refrigerant HFC-134a at a temperature of 300 °C under the existence of Cu, Fe and aluminum were investigated.

[Fig. 6] Fig. 6 is a gas chromatogram examined decomposition behaviors of HFO-1234yf under the existence of Fe and aluminum.

[Fig. 7] Fig. 7 is an explanatory diagram showing a mechanism of reaction of HFO-1234yf with a surface of a metal material.

[Fig. 8] Fig. 8 is a schematic diagram of a refrigeration circuit-forming member according to the present invention.

Embodiments for carrying out the Invention

Hereinafter, embodiments of the present invention will be explained referring to figures.

In the present invention, first, in order to investigate a condition where the effect targeted in the present invention can be obtained when a metal surface formed from what kind of metal is covered with a coating layer according to the present invention, in particular, in respect to Al, Fe and Cu which are typical kinds of metals for forming a refrigeration circuit-forming member of an air conditioning system for vehicles, a reaction behavior (in particular, a decomposition behavior) of HFO-1234yf under the existence of each of the metals was examined in comparison with a reaction behavior of HFC-134a which was a conventional refrigerant. The method and result of the examination will be explained below.

<preparation of metal sample>

Because a metal piece of Cu, Fe or aluminum has a small contact surface area as it is, a sample formed by loading the metal component onto a chemically inert silica ($SiO_2$) and having a large specific surface area was prepared by using a method described below. Silica (Merck Silica gel 60, 410m$^2$/g) was put in a muffle furnace, was sintered for 3 hours after it reached a temperature of 510 °C, and thereafter, was cooled approximately to a room temperature. The sintered silica was impregnated with solution of nitrate salt of copper, iron or aluminum, after being left as it is for approximately 30 minutes, moisture was removed therefrom while using a rotary evaporator and reducing in pressure at 50 °C by a water stream pump, and it was sintered at 450 °C in air to prepare a start material. Aluminum was sintered in a helium gas flow. Where, the total metal content was set to 10 wt. % at a standard of sample weight (0.5 g of sample contains 0.05 g of the metal).

<reduction of metal sample>.

0.5g of the sample was filled into an U-shaped glass tube "Pyrex" (a registered trademark), it was reduced chemically for 1 hour after being heated to reach 450 °C while ventilating hydrogen through a mass flow controller at 70 mg/min (stp), and thereafter, while the part of the U-shaped reaction tube was vacuum evacuated at a level of x 10$^{-4}$ Torr (a level of x 10$^{-2}$Pa), it was cooled down to a predetermined temperature. and it was used for decomposition of refrigerant.

<decomposition of refrigerant>

A refrigerant was introduced into a 160 Torr closed system (approximately 21 kPa), it was made to come into contact with each metal sample at 130, 200 and 300 °C while being stirred by a circulation pump, and the components in the closed system were analyzed by a FID-gas chromatograph (made by SHIMADZU CORPORATION, GC8A). A SUS column having a size of 2m × 3φ which was filled with VZ-lO (made by GL Sciences Inc.) was attached to the gas chromatograph and was ventilated with helium carrier gas at 40 ml/min, and then, an analysis was performed as keeping a temperature of the column at 65 °C for HFO-1234yf, at 75 °C for HFC-134a.

Mass spectrometry was performed with respect to some samples in order to confirm the presence or absence of decomposition. A refrigerant paper being in a chemical reaction was taken into a vacuum sample tube, and it was introduced into a quadrupole mass spectrometer (Pffeifer Prisma Q-pole M/S) at a level of x 10$^{-6}$ - 10$^{-7}$ Torr through a variable leak valve to observe a fragment peak at 70eV of ionization voltage.

[result]

<stability of refrigerant under absence of metal>

First, under an absence of metal, namely, the chemical stability of refrigerant itself was confirmed. Without using a metal sample, when a gas chromatogram of HFO-1234yf at a state of a room temperature was compared with a gas chromatogram thereof at a state after the temperature had been kept at 400 °C for an hour, no difference was recognized in both chromatograms. The introduction pressure of HFO-1234yf was set to 160mmHg in both cases. In order to investigate the thermal stability of HFO-1234yf in more detail, HFO-1234yf was kept at a pressure of 160 mmHg and a temperature of 400 °C, the mass spectrometry was carried out at timings of respective expired times of 20, 60 and 120 minutes, and the spectra under respective conditions were compared using a background spectrum as reference. As a result, a variance was scarcely observed in ratios of intensity of fragment peak in the respective conditions of the expired times of 20, 60 and 120 minutes. From this result of the analysis, it was determined that HFO-1234yf was hardly decomposed (almost not be decomposed) even at a high temperature of 400 °C when there was no metal.

Next, chemical stability of HFO-1234yf under the existence of various metals was examined.
In this examination, because it would take a long time for the reaction and examination if a sample consisting merely of a metal piece is brought into contact with HFO-1234yf, the examination was performed using a particle consisting of a material in which the metal as an object of the examination was loaded on a chemically inert inorganic material (pellet-like particle, and particle made as a powder-like form in order to further accelerate the reaction). Namely, it is a quick evaluation method for evaluating the change of refrigerant by using a material in which the metal is loaded on a chemically inert inorganic material, obtained by impregnating a chemically inert silica ($SiO_2$, its specific surface area is 350 $m^2$/g or more) with a solution of copper, iron or aluminum nitrate salt, removing moisture from it and reducing it chemically under hydrogen atmosphere in a temperature range of 400°C or higher and 520°C or lower. In this quick evaluation method, the refrigerant can be brought into contact with the above-described material repeatedly by circulating the refrigerant in a closed system. More concretely, the respective examination target metals were examined as follows.

<stability of HFO-1234yf under presence of Cu>

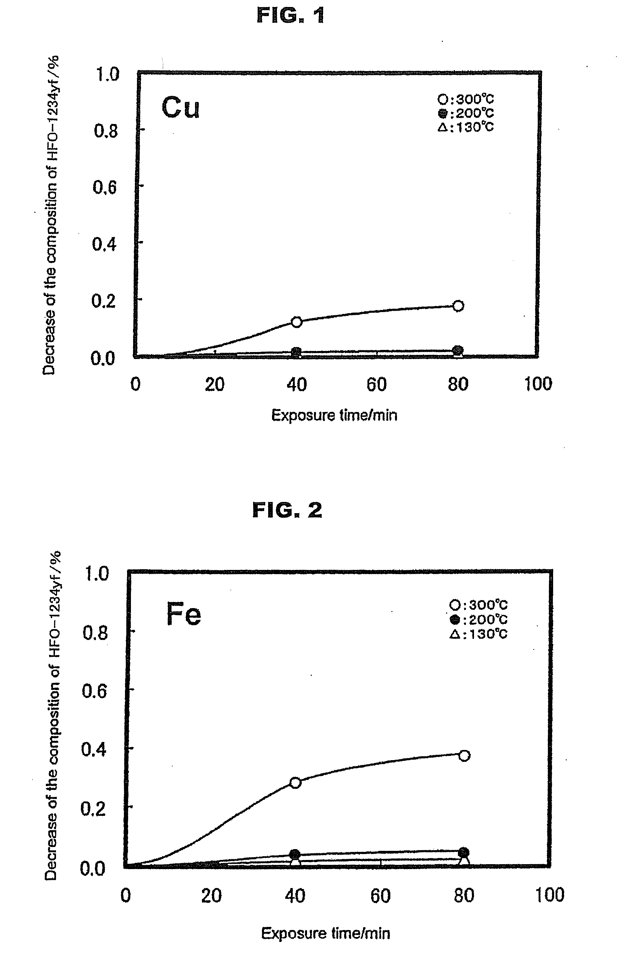

After 0.5g of sample containing Cu (hereinafter, it is described as $Cu/SiO_2$) was introduced into a glass reaction tube and a process of chemical reduction was performed, the refrigerant HFO-1234yf was introduced at160 mmHg. Chronological changes of decomposition rate at 130, 200 and 300 °C are shown in Fig. 1. The decomposition rate referred here is defined by the following equation.

$$\text{decomposition rate} = [\ (\text{composition before decomposition of HFO-1234yf} - \text{composition after decomposition of HFO-1234yf}) / (\text{composition before decomposition of HFO-1234yf})\ ] \times 100$$

As a result, the decomposition rate of HFO-1234yf at 130 °C was approximately 0 even after 80 minutes passed. Although the decomposition rate increased slightly when the decomposition temperature was set to 200 °C, the value was extremely small. When brought into contact with $Cu/SiO_2$ at 300 °C, the decomposition rate reached approximately 0.2 % after 80 minutes passed. Thus, it was shown that, under the existence of Cu, the decomposition was scarcely promoted at approximately 130 °C which was a high-temperature range in a usual refrigeration circuit, and the decomposition was slightly accelerated at 200 °C or higher. Therefore, it is understood that, in a part where a metal surface coming into contact with HFO-1234yf in a refrigeration circuit consists of Cu or a Cu-based metal and where a temperature elevates to a usual temperature of 130 °C at highest, the necessity of the coating layer according to the present invention is low, but, in a part where there is a possibility that the temperature would elevate to 200 °C or higher (for example, a surface of an interior sliding member in a compressor, as aforementioned), it is effective to provide the coating layer according to the present invention.

<stability of HFO-1234yf under presence of Fe>

Similarly to the case with the above-described $Cu/SiO_2$, 0.5g of $Fe/SiO_2$ was used in the stability examination of HFO-1234yf. As shown in Fig. 2, in case of $Fe/SiO_2$, the decomposition was promoted slightly even at 130 °C, and the decomposition rate at a time when 80 minutes passed was 0.02 % at 200 °C. The rate at 300 °C was 0.4 % (80 minutes), which was approximately two times relative to that in the case of $Cu/SiO_2$. Even under the existence of Fe, the result that the acceleration of the decomposition became remarkable at 200 °C or higher was similar to the case of $Cu/SiO_2$, but it was found that the decomposition was promoted slightly even in a low-temperature range (130-200 °C). Therefore, it is understood that, in case where a metal surface coming into contact with HFO-1234yf in a refrigeration circuit consists of Fe or an Fe-based metal, it is effective to provide the coating layer according to the present invention.

<stability of HFO-1234yf under presence of Al>

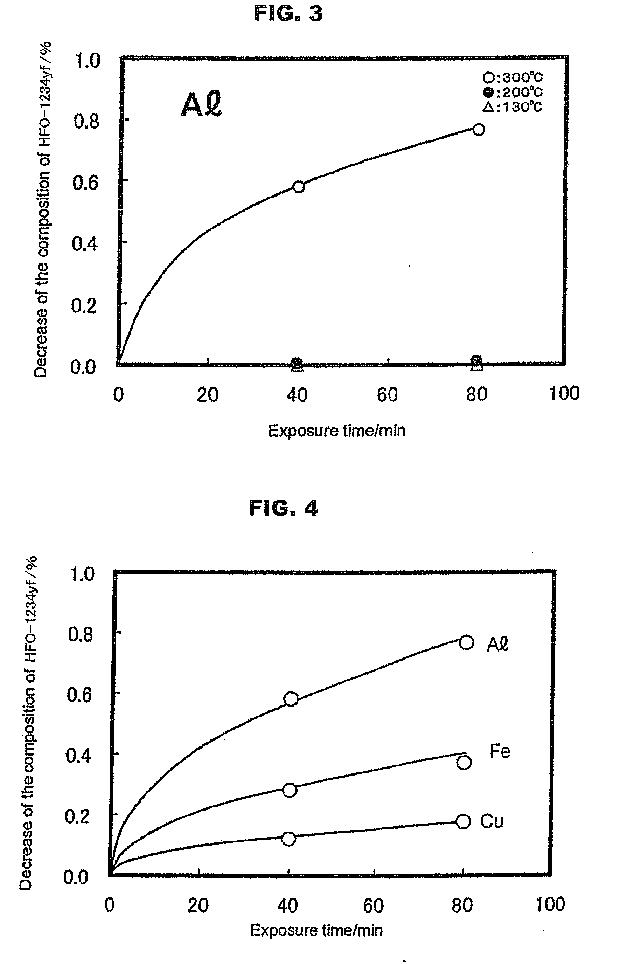

Similarly to the case with the aforementioned $Cu/SiO_2$, 0.5g of $Al/SiO_2$ was used in the stability examination of HFO-1234yf. As shown in Fig. 3, in case of $Al/SiO_2$, the decomposition was hardly promoted at 200 °C or lower. However, when the temperature was elevated to 300 °C, the decomposition of HFO-1234yf increased remarkably, and the decomposition rate reached 0.8 % or more after 80 minutes passed. This was approximately 4 times relative to the decomposition rate of the case of $Cu/SiO_2$. Therefore, it is understood that, in case where the metal surface coming into contact with HFO-1234yf in a refrigeration circuit consists of Al or an Al-based metal, it is effective to provide the coating layer according to the present invention particularly to a part becoming a high temperature.

The comparison result of the decomposition rates of the refrigerant HFO-1234yf at 300 °C is shown in Fig. 4, and it is understood that the effects of the decomposition are listed in order of Al > Fe > Cu.

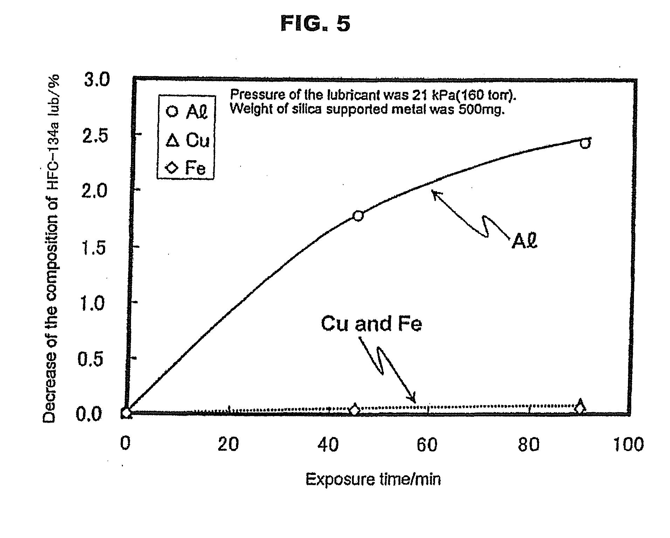

Where, with respect to the case of HFC-134a which is the conventional refrigerant, similarly to the case with HFO-1234yf, the decomposition rate was determined by bringing it into contact with $Al/SiO_2$, $Cu/SiO_2$ and $Fe/SiO_2$. The decomposition of HFC-134a was scarcely recognized at 200 °C or lower, and the progress of the decomposition was accelerated at 300 °C. In this respect, the result was similar to the case of HFO-1234yf. However, the decomposition rate at 300 °C and at a time when 90 minutes passed, as shown in Fig. 5, was in a range of 0.06%-0.08% in cases of $Cu/SiO_2$ and $Fe/SiO_2$, and was much lower than the range of 0.2%-0.4% in case of HFO-1234yf. Therefore, in case of HFC-134a, it is considered that the stability under the existence of Cu or Fe is extremely excellent in comparison with HFO-1234yf. In other words, except the case of the coexistence of Al, HFC-134a substantially is not decomposed in a refrigeration circuit. However, the decomposition rate reached 2.5% when the decomposition examination of HFC-134a was carried out at 300 °C using $Al/SiO_2$. From this result, it has been found that an Al component greatly influences the decompositions of both refrigerants, and it is understood that, even for the case of HFC-134a as a conventional refrigerant as well as the case of the refrigerant HFO-1234yf in the present invention, it is particularly effective to provide the coating layer according to the present invention in case where a metal surface coming into contact with the refrigerant in a refrigeration circuit consists of Al or an Al-based metal and is positioned at a part that reaches a high temperature.

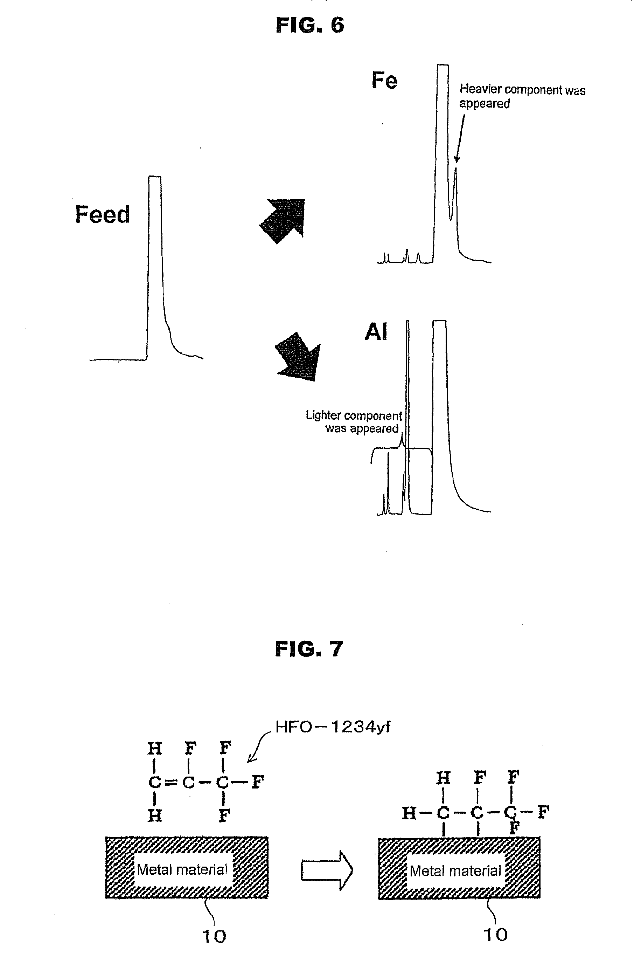

Next, a decomposition behavior of the refrigerant HFO-1234yf in the present invention under the existence of metal, especially the decomposition behavior (products of the decomposition) with respect to the cases of Fe and Al in which decompositions were recognized in the above-described examination, was further examined. In respect to a decomposition product by the above-described $Fe/SiO_2$ and $Al/SiO_2$, the comparison of gas chromatograms is shown in Fig. 6. "Feed" is a chromatogram of the refrigerant HFO-1234yf itself. While a new peak (Heavier component) appeared behind the peak of HFO-1234yf in case using $Fe/SiO_2$, the peak which was observed in the case of $Fe/SiO_2$ did not appear but a new peak (Lighter Component) appeared ahead of the peak of HFO-1234yf in case of $Al/SiO_2$. Thus, it was found that the decomposition behaviors were different from each other depending upon existed metals. Generally, (if a polarity, etc. is the same,) a retention time of a low molecular-mass material has a tendency to be short, and the result indicated a possibility to turn into a higher molecular-mass material in case of Fe, and to turn into a lower molecular-mass material in case of Al. Namely, it is considered that a polymerized material was created under the coexistence of Fe and a decomposed material was created under the coexistence of Al.

From these examination results, a mechanism that HFO-1234yf reacts with a surface of a metal material of Fe or Al under the coexistence thereof is considered as follows. As shown in Fig. 7, HFO-1234yf has a double bond in a molecule, and it is considered that the decomposition and polymerization of HFO-1234yf is initiated by an adsorption or bonding of a $\pi$ electron participating one bond among the double bond onto a surface of metal material 10.

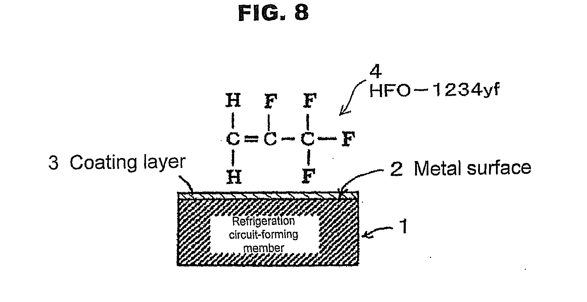

Therefore, from the knowledge based on the above-described examinations, with respect to a refrigeration circuit-forming member which has a metal surface and is used in a refrigeration circuit using HFO-1234yf that is a specific refrigerant configured of a molecule having a double bond, it is extremely effective for avoiding the decomposition and polymerization of HFO-1234yf that the metal surface of the member coming into contact with HFO-1234yf is covered with a coating layer which is substantially not reactive with HFO-1234yf within a range of temperature at which HFO-1234yf is used, and it is considered that the initiation of the decomposition and polymerization of HFO-1234yf caused by the mechanism shown in Fig. 7 can be prevented by the existence of such a coating layer. Namely, as shown in Fig. 8, a direct contact between HFO-1234yf being circulated in the refrigeration circuit and metal surface 2 of refrigeration circuit-forming member 1 is interrupted by a specific coating layer 3 formed on the metal surface 2 of the refrigeration circuit-forming member 1. Because this specific coating layer is substantially not reactive with HFO-1234yf within a range of temperature at which HFO-1234yf is used, as long as the direct contact between HFO-1234yf and a metal surface which has a possibility to be reacted with HFO-1234yf is interrupted, the initiation of the decomposition and polymerization of HFO-1234yf caused by the mechanism shown in Fig. 7 can be prevented. In this case, from the examination result described above, particularly in case where a metal surface as an object to be covered with the coating layer is formed of a component containing at least one or more selected from the group consisting of an Al component, an Fe-based component and a Cu-based component, and further, is formed of a component containing at least one or more selected from the group consisting of an Al component and an Fe-based component, and in particular, is formed of a component containing an Al component, it is understood that it is effective to interrupt the direct contact between HFO-1234yf and the metal surface of the refrigeration circuit-forming member by the coating layer.

As aforementioned, such a coating layer can be formed by a fixed coating film onto a metal surface, for example, a fixed coating film formed of any of a DLC coating film, a resin-coating film (for example, a polytetrafluoroethylene coating film), a tungsten • carbide coating film, a molybdenum disulfide coating film, a boron nitride coating film, a zinc-plated coating film, a tin-plated coating film, an $SiO_2$-containing coating film, an Fe-P-based electroplated coating film, an Fe-W-based electroplated coating film, an Fe-C-based electroplated coating film, an Fe-N-based electroplated coating film, a Co-based electroplated coating film, a Co-W-based electroplated coating film and a Cr-Mo-based electroplated coating film, or by a coating layer formed by a specific component (for example, including a silicone-based component and/or a fluorine-based component) which is added into a lubricating oil and is applied adhesively to a metal surface, or further, by a coating layer formed by modification of a metal surface layer itself (for example, a coating layer modified by anodic oxidation, in particular, a coating layer modified by applying anodic oxidation to a metal surface consisting of aluminum or an aluminum alloy).

In order to confirm the effectiveness of such a coating layer interrupting the direct contact between HFO-1234yf and a metal surface of a refrigeration circuit-forming member, in particular, an examination to bring an Fe-based sample and an Al-based sample into direct contact with HFO-1234yf was carried out to examine the decomposition and polymerization of HFO-1234yf. The examination was performed on a shoe which was an interior sliding member of a swash plate-type compressor and on a fixed scroll member which was an interior sliding member of a scroll type compressor, both of which are considered to be exposed to the severest condition among refrigeration circuit-forming members that are currently used, and performed under a condition of 300 °C which is considered as the highest temperature practically employed (although it was also confirmed at 200 °C). An Fe-based component SUJ2 was used as a component for forming a metal surface of the shoe, and an Al-based component A4032 was used as a component for forming a metal surface of the fixed scroll member. In the examination, in order to accelerate the reaction, each metal sample was supplied to the examination after forming that as a powder form. Further, supposing various contamination into HFO-1234yf, the examination was also carried out as to both cases of contamination and non-contamination with water component (at highest, 10 Torr), and as to both cases of contamination and non-contamination with a gas containing 80% of nitrogen and 20% of oxygen that corresponded to air.

As a result, in both SUJ2 and A4032, when metal sample powder were brought into contact with HFO-1234yf, the behaviors of decomposition and polymerization of HFO-1234yf, similar to those in the examination results of the aforementioned cases of Fe and Al sample powder was confirmed. Therefore, it could be confirmed that the coating layer according to the present invention was also extremely effective for alloy species which were actually used.

Industrial Applications of the Invention

The refrigeration circuit-forming member having a specific coating layer according to the present invention is applicable to any refrigeration circuit using the refrigerant HFO-1234yf, and in particular, is suitable for a refrigeration circuit for an air conditioning system for vehicles.

Explanation of symbols

    1: refrigeration circuit-forming member
    2: metal surface
    3: coating layer
    4: HFO-1234yf
    10: metal component

**Claims**

1. A refrigeration circuit-forming member which has a metal surface and is used for a refrigeration circuit in which HFO-1234yf that is a specific refrigerant configured of molecules having a double bond is used, **characterized in that** said metal surface of said member coming into contact with said HFO-1234yf is covered with a coating layer that is substantially not reactive with said HFO-1234yf within a range of temperature at which said HFO-1234yf is used, and said coating layer is formed by any of (1) fixing a coating film firmly to said metal surface, (2) applying a specific component, which is added into a lubricant oil circulated in said refrigerant circuit together with said HFO-1234yf, adhesively to said metal surface and (3) modifying a metal surface layer itself that forms said metal surface.

2. The refrigeration circuit-forming member according to claim 1, wherein said coating film which is fixed firmly to said metal surface is formed of any one selected from the group consisting of a DLC coating film, a resin-coating film, a tungsten·carbide coating film, a molybdenum disulfide coating film, a boron nitride coating film, a zinc-plated coating film, a tin-plated coating film, an $SiO_2$-containing coating film, an Fe-P-based electroplated coating film, an Fe-W-based electroplated coating film, an Fe-C-based electroplated coating film, an Fe-N-based electroplated coating film, a Co-based electroplated coating film, a Co-W-based electroplated coating film and a Cr-Mo-based electroplated coating film.

3. The refrigeration circuit-forming member according to claim 2, wherein a resin of said resin-coating film comprises polytetrafluoroethylene.

4. The refrigeration circuit-forming member according to claim 1, wherein said specific component, which is added into said lubricant oil and is applied adhesively to said metal surface, contains at least a silicone-based component or a fluorine-based component, or both of said components.

5. The refrigeration circuit-forming member according to claim 1, wherein modification of said metal surface layer itself is performed by anodic oxidation.

6. The refrigeration circuit-forming member according to claim 5, wherein said metal surface is formed of an aluminum or an aluminum alloy and said modification of said metal surface layer itself is performed by anodic oxidation of aluminum.

7. The refrigeration circuit-forming member according to any of claims 1-6, wherein a material for forming said metal surface contains at least one or more selected from the group consisting of an aluminum component, an Fe-based component and a Cu-based component.

8. The refrigeration circuit-forming member according to any of claims 1-7, wherein said refrigeration circuit is a refrigeration circuit for an air conditioning system for vehicles.

9. The refrigeration circuit-forming member according to any of claims 1-8, wherein said refrigeration circuit-forming member is an interior sliding member of a compressor provided in said refrigeration circuit.

**FIG. 1**

**FIG. 2**

**FIG. 3**

**FIG. 4**

## FIG. 5

## FIG. 6

Feed

Fe

Heavier component was appeared

Al

Lighter component was appeared

## FIG. 7

HFO−1234yf

Metal material
10

Metal material
10

# FIG. 8

## INTERNATIONAL SEARCH REPORT

| | International application No. |
|---|---|
| | PCT/JP2010/054816 |

**A. CLASSIFICATION OF SUBJECT MATTER**
*F25B1/00*(2006.01)i, *C09K5/04*(2006.01)i, *C10M147/02*(2006.01)i, *C10M155/02* (2006.01)i, *C10N40/30*(2006.01)n

According to International Patent Classification (IPC) or to both national classification and IPC

**B. FIELDS SEARCHED**

Minimum documentation searched (classification system followed by classification symbols)
F25B1/00, C09K5/04, C10M147/02, C10M155/02, C10N40/30

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-544072 A (Honeywell International Inc.),<br>04 December 2008 (04.12.2008),<br>claims 16, 46 to 48 | 1-3,5-9<br>4 |
| Y<br>A | JP 2008-164254 A (Daikin Industries, Ltd.),<br>17 July 2008 (17.07.2008),<br>claims 5, 6; paragraphs [0034] to [0035], [0045] | 1-3,8,9<br>4-7 |
| Y<br>A | JP 10-220917 A (Yugen Kaisha Bushu Denki),<br>21 August 1998 (21.08.1998),<br>claim 4 | 1,5-9<br>2-4 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 April, 2010 (21.04.10) | Date of mailing of the international search report<br>11 May, 2010 (11.05.10) |
|---|---|
| Name and mailing address of the ISA/<br>Japanese Patent Office | Authorized officer |
| Facsimile No. | Telephone No. |

Form PCT/ISA/210 (second sheet) (July 2009)

<table>
<tr><td colspan="2">**INTERNATIONAL SEARCH REPORT**<br>Information on patent family members</td><td>International application No.<br>PCT/JP2010/054816</td></tr>
</table>

```
JP 2008-544072 A        2008.12.04      JP 2008-546892 A
                                        US 2007/0007488 A1
                                        US 2008/0098755 A1
                                        US 2008/0166305 A1
                                        US 2008/0171652 A1
                                        US 2008/0292564 A1
                                        US 2010/0044619 A
                                        US 2008/0121837 A1
                                        EP 1893714 A
                                        EP 1893715 A
                                        EP 2154223 A
                                        WO 2007/002625 A2
                                        WO 2007/002703 A2
                                        WO 2009/009413 A2
                                        CA 2612986 A
                                        CA 2613090 A
                                        KR 10-2008-0033292 A
                                        KR 10-2008-0025748 A
                                        CN 101248153 A
                                        CN 101283071 A
                                        ZA 200711194 A
                                        AR 67469 A

JP 2008-164254 A        2008.07.17      (Family: none)

JP 10-220917 A          1998.08.21      (Family: none)
```

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6858571 B2